**Europäisches Patentamt**

**European Patent Office**

**Office européen des brevets**

(19)

(11) Numéro de publication: **0 054 462**
**A1**

# (12) DEMANDE DE BREVET EUROPEEN

(21) Numéro de dépôt: **81401897.4**

(22) Date de dépôt: **30.11.81**

(51) Int. Cl.³: **B 08 B 7/04**
**B 65 G 27/04**

(30) Priorité: **17.12.80 FR 8026805**

(43) Date de publication de la demande:
**23.06.82 Bulletin 82/25**

(84) Etats contractants désignés:
**DE GB IT**

(71) Demandeur: **SO.DE.EM SOCIETE D'EXPLOITATION DES ETABLISSEMENTS MINATO**
**Fouquerolles**
**F-60510 Bresles(FR)**

(72) Inventeur: **Van de Caveye, Yves**
**46, rue Ville-le-bois Mareuil**
**F-60000 Beauvais(FR)**

(74) Mandataire: **Beauchamps, Georges et al,**
**Cabinet Z.Weinstein 20, avenue de Friedland**
**F-75008 Paris(FR)**

(54) **Procédé pour décoller et évacuer une couche fine de matériau, adhérente sur une paroi, structure de paroi pour la mise en oeuvre du procédé, et dispositif de transport de béton comprenant cette structure de paroi.**

(57) La présente invention concerne un procédé pour décoller et évacuer une couche fine de matériau adhérente sur une paroi, un filtre ou une membrane.

Le procédé de l'invention consiste successivement:

- à former sur la paroi (4) avant adhérence du matériau, des déformations multiples par aspiration d'une membrane élastique (5), sur un treillis (8) fixé sur la paroi (4), au moyen d'une source de vide (10)

- à supprimer, quand la couche adhérente est cassante, les déformations précitées par rétablissement de la pression dans l'enceinte (7) par l'intermédiaire de la mise à l'air libre (11).

- à produire des chocs localisés sur ladite surface (5) pour fragmenter la couche adhérente.

La présente invention s'applique notamment à l'industrie du bâtiment.

FIG.2

EP 0 054 462 A1

1

<u>Procédé pour décoller et évacuer une couche fine de matériau, adhérente sur une paroi, structure de paroi pour la mise en oeuvre du procédé, et dispositif de transport de béton comprenant cette structure de paroi.</u>

L'invention a essentiellement pour objet un procédé pour décoller et évacuer une couche fine de matériau déposée et adhérente sur une paroi, et une structure de paroi pour la mise en oeuvre de ce procédé.

La présente invention est applicable dans de nombreux processus industriels, au cours desquels un matériau est suceptible de se déposer et d'adhérer sur une surface, ce qui, généralement, a pour conséquence de diminuer la productivité du processus.

On peut citer comme exemples de processus industriels concernés par l'invention, les processus mettant en oeuvre un dispositif de transfert d'un matériau pouvant se déposer et adhérer à une paroi tel que le transfert de béton frais dans une installation de fabrication de béton ou de fabrication de produits moulés en béton ; de chocolat, de sucre, dans l'industrie alimentaire, de sels minéraux dans l'industrie chimique. De plus, le procédé et la structure de paroi de l'invention peuvent être également appliqués au détartrage d'installations comprenant une chaudière ou un réservoir d'eau chaude, ou dans des installations comprenant des filtres ou membranes.

Dans ces installations, le décollage et l'évacuation du matériau adhérent sur les parois demandaient généralement une intervention manuelle, et dans tous les cas un arrêt prolongé de l'installation.

La présente invention a été plus particulièrement

2

développée pour résoudre le problème de colmatage d'un dispositif pour transfert de béton, tel qu'un couloir vibrant de recyclage de béton dans une presse de moulage.

Dans un tel dispositif, la prise et l'adhérence d'une couche mince de béton sur la paroi du couloir est très rapide. Cette prise rapide est due en partie au mouvement de vibration du couloir. Il était donc nécessaire d'arrêter l'installation après un temps de fonctionnement relativement court, par exemple une demi-journée, pour décoller et casser la couche fine de béton adhérente. Cette opération demandait un travail intensif pendant une assez longue durée, par exemple trois heures et requérait également le travail de plusieurs ouvriers. De plus, la répétition des opérations de nettoyage provoquait une usure accélérée de la paroi du couloir.

La présente invention à notamment pour but de remédier à ces inconvénients en proposant un procédé pour décoller et évacuer une couche fine de matériau adhérente sur une paroi, permettant de diminuer de manière importante les temps d'arrêt de l'installation et le travail, pour le nettoyage de la paroi ou même de les supprimer totalement.

A cet effet, l'invention a pour objet un procédé pour décoller et évacuer une couche fine adhérente sur une paroi, d'un matériau succeptible de durcir et/ou de s'agglomérer, tel que des sels minéraux, du béton, du chocolat, du sucre ou analogues, caractérisé en ce qu'il comprend les opérations successives :

- de former sur ladite paroi, avant l'adhérence du matériau, des déformations multiples ;

- de supprimer, quand le durcissement du matériau a rendu la couche cassante, les déformations précitées pour décoller ladite couche de la surface ;

- de produire des chocs localisés sur ladite paroi pour fragmenter ladite couche et évacuer les fragments ainsi formés.

Avantageusement, selon l'invention, les déformations multiples précitées sont formées par aspiration.

L'invention vise également une structure de paroi par exemple pour chaudière ou récipient, ou pour dispositif de transfert de matériau tel que par exemple un couloir de distribution de béton frais, de chocolat, de sucre, ou analogues, ou pour des membranes ou filtres, permettant le décollage et l'évacuation d'une couche fine adhérente de matériau sur ladite paroi, selon le procédé de l'invention.

A cet effet, la structure de paroi de l'invention comprend une paroi de support recouverte par une paroi élastiquement déformable, sous laquelle se dépose et/ou adhère un matériau tel que par exemple du béton frais,du chocolat, du sucre, des sels minéraux ou analogues. Ladite paroi déformable prend appui localement sur des éléments d'appui interposés et répartis entre les deux parois précitées. De plus, la structure de paroi de l'invention comprend des moyens pour déformer ladite paroi déformable.

Ainsi, il est possible, au début de l'opération de transfert ou de stockage, d'obtenir une surface en contact avec le matériau, présentant de nombreuses déformations.

Selon une caractéristique de l'invention, les éléments d'appui précités sont constitués par un treillis.

Avantageusement, ce treillis est réalisé en métal déployé.

Ainsi, sous l'effet d'une force, la paroi déformable précitée épousera les contours du treillis, donc définira une surface de contact avec le matériau colmatant présentant de nombreuses alvéoles par exemple.

Selon une autre caractéristique de l'invention, la paroi déformable précitée est fixée, au voisinage de ses extrémités, sur la paroi de support précité de manière à définir une enceinte étanche entre ses deux parois. De plus, la paroi de support présente au moins un orifice pour relier l'enceinte à des moyens d'aspiration et des moyens de mise à l'air libre.

Ainsi, il est possible de diminuer la pression dans l'enceinte précitée, pour déformer la paroi déformable précitée.

Avantageusement, selon l'invention, plusieurs orifices précités sont répartis sur toute la surface de la paroi support, pour obtenir une meilleure mise à l'air libre.

Selon une autre caractéristique de l'invention la paroi déformable précitée est une membrane en matière synthétique.

Ainsi, cette membrane présente une propriété de déformation élastique élevée.

Selon une autre caractéristique de l'invention, un vibrateur est fixé sur la paroi support. Avantageusement

5

ce vibrateur est également utilisé pour provoquer le transfert du matériau sur ladite paroi.

La présente invention a également pour objet un dispositif de transfert de béton, tel qu'un couloir de transport vibrant, caractérisé en ce que la paroi de support du béton a une structure conforme à l'invention.

D'autres caractéristiques et avantages de l'invention apparaîtront plus clairement à la lumière de la description explicative qui va suivre, d'un mode de réalisation préféré de l'invention, faite en référence aux dessins schématiques annexés, donnés uniquement à titre d'exemples et dans lesquels :

La figure 1 est une vue schématique de côté selon la flèche 1 de la figure 2, illustrant un mode de réalisation préféré d'un couloir de transport vibrant conforme à l'invention ;

La figure 2 est une vue en coupe selon la ligne II-II de la figure 1, illustrant la structure, conforme à l'invention de la paroi du couloir de transport vibrant; et

Les figures 3, 4 et 5 sont des vues agrandies de la zone III de la figure 2, illustrant les différentes étapes du procédé de l'invention.

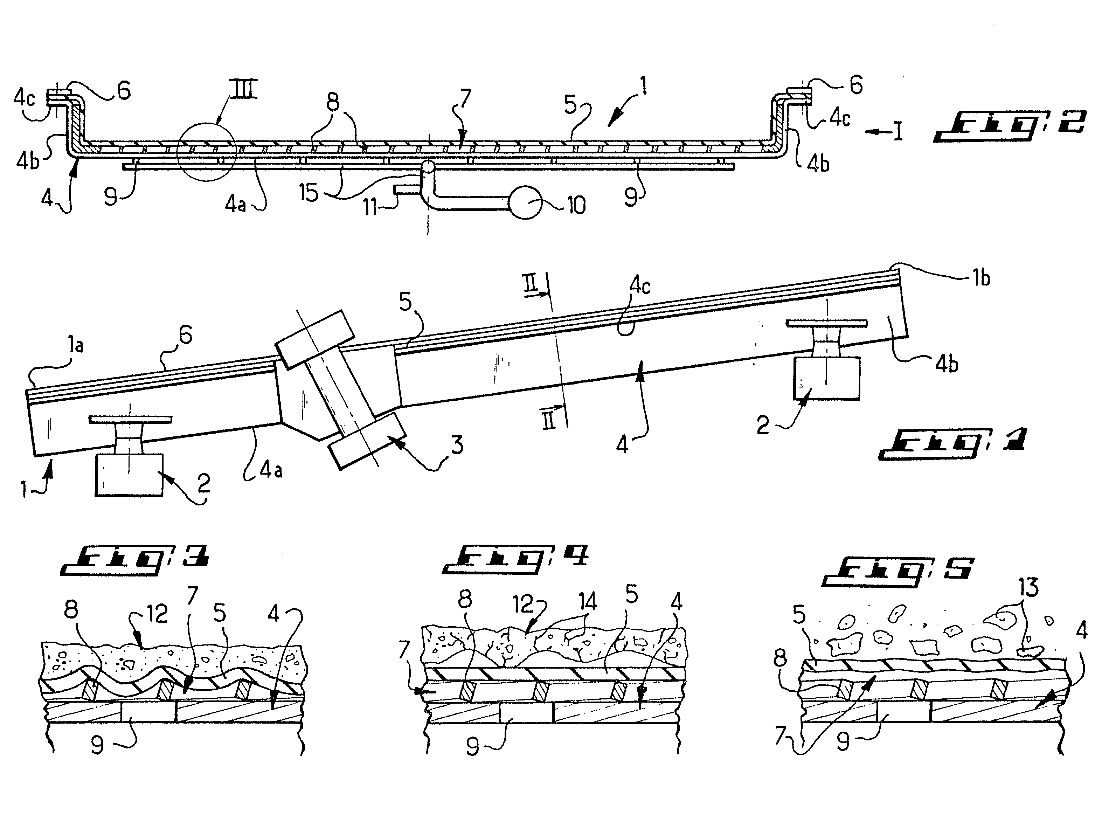

En se référant aux figures 1 et 2, nous décrirons une application particulière de l'invention, concernant un couloir transporteur vibrant destiné au recyclage du béton dans une presse de moulage.

Bien entendu, il est évident que l'on peut réaliser des parois à structure conforme à l'invention pour par exemple des chaudières, des récipients de stockage, des appareils de transfert de matériau ou analogues, pour mettre en oeuvre le procédé conforme à l'invention de décollage et d'évacuation de la couche fine de matériau déposée sur lesdites parois.

En se reportant aux figures 1 et 2, le couloir transporteur vibrant 1 comprend une enveloppe 4 métallique en forme d'auge et de forme allongée. Cette paroi de support 4 comprend un plateau $4_a$ de forme allongée bordé latéralement par deux bords de guidage $4_b$ et d'extrémités $4_c$ recourbées vers l'extérieur. Sur chacun des côtés latéraux de ce couloir transporteur 1 est prévu un dispositif vibreur 3 connu en soi.

Par ailleurs le couloir transporteur 1 est monté sur des supports ou amortisseurs en caoutchouc 2 tel que silent-blocs. Selon l'invention, la paroi 4 du couloir transporteur est recouverte sur toute sa surface par une paroi élastiquement déformable 5, telle que par exemple une membrane plastique. Cette membrane est fixée de manière étanche sur les extrémités $4_c$ de l'enveloppe 4 par collage, soudage, ou par des moyens de serrage 6. Ainsi, on définit une enceinte fermée 7 entre la membrane 5 et la paroi 4.

Comme on le voit clairement sur la figure 2, on interpose entre la membrane 5 et la paroi 4, des éléments d'appui 8 de la membrane.

Avantageusement, les éléments d'appui sont constitués par un treillis réalisé en métal déployé, et disposé sur toute la surface utile du couloir vibrant 4.

Ainsi, comme cela est illustré sur la figure 2, le couloir vibrant présente une surface plane tant que l'on exerce aucune force sur la membrane élastique 5.

Dans le mode de réalisation préféré de l'invention, la paroi 4 est munie d'orifice 9 répartis sur toute la surface de la paroi 4, pour relier l'enceinte 7, à des moyens d'aspiration 10, ou source de vide et à des moyens de mise à l'air libre 11, par l'intermédiaire de conduits de raccordement 15.

Il est avantageux d'avoir plusieurs orifices sur la paroi 4 pour obtenir une pression homogène dans l'enceinte 7.

Il est important de noter que dans le mode de réalisation préféré de l'invention, le treillis est fixé sur la paroi 4, par exemple par soudure par point.

Le couloir transporteur vibrant conforme à l'invention fonctionne de la façon suivante.

Du béton est alimenté au voisinage de l'extrémité $1_a$ du couloir vibrant. Les vibreurs 3 soumettent le couloir vibrant 1 à des vibrations appropriées de façon à transporter le béton de l'extrémité $1_a$ vers l'extrémité $1_b$ du couloir.

Il est évident de comprendre que pendant la durée du transfert du béton une mince couche de celui-ci adhère au fond du couloir et se durcit pour former une couche de colmatage.

Dans le couloir de transport 1 réalisé avec une structure de paroi conforme à l'invention, il est aisé et rapide de décoller et de briser cette couche adhérente de béton.

En se référant aux figures 3, 4 et 5 nous définirons maintenant les différentes étapes du procédé permettant le décollement et l'évacuation aisée et rapide de la couche de béton de colmatage.

La figure 2 illustre la position de la membrane 5 lorsque le couloir transporteur 1 est à l'arrêt.

Avant d'alimenter le couloir transporteur 1 en béton, conformément à l'invention, on diminue la pression dans l'enceinte 7 en reliant les différentes ouvertures 9 à la source de vide 10. De ce fait , et comme cela est clairement illustré sur la figure 3, la membrane 5 est attirée vers la paroi 4, et pénètre dans les mailles du treillis 8.

Ainsi la membrane 5 présente de multiples déformations, correspondant à la grosseur et à la densité des mailles du treillis 8.

Le béton est alors alimenté à l'extrémité $1_a$ du couloir transporteur et les vibrateurs 3 provoquent son transport vers l'extrémité $1_b$ dudit couloir 1. Pendant ce transport une fine couche de béton 12 adhère sur la membrane 5 pour former une couche de colmatage du couloir de transport 1.

Conformément à la présente invention, on réalise le décollement de la couche fine de colmatage 12 lorsque la rigidité de ladite couche 12 est suffisante pour la rendre cassante, mais avant que son épaisseur ne la rende difficile à briser.

La rapidité du procédé de l'invention permet de réaliser le décollement de la couche de colmatage 12, sans qu'il soit necessaire d'arrêter l'unité de fabrication.

Pour cela, on rétablit la pression dans l'enceinte 7 par l'intermédiaire des moyens de mise à l'air 11. La membrane 5 n'étant plus soumise à des forces d'attraction vers la paroi 4, reprend sa forme initiale plane représentée sur la figure 4.

La suppression des déformations de la membrane 5 provoque un faible déplacement et un décollement de la couche de béton 12 par rapport à la membrane 5.Ce léger déplacement induit des amorces de fissures 14 dans la couche de béton 12, ces fissures étant principalement localisées dans les parties déformées de la couche de béton 12.

A ce stade, les vibrations de la paroi 4, induites par les vibrateurs 3, provoquent une vibration et un déplacement vertical du treillis 8 qui vient heurter la membrane 5, et provoquer la fragmentation de la couche 12 en petits morceaux de béton 13, comme cela est illustré sur la figure 5.

Dès que l'on a obtenu un décollement et une fragmentation de la couche de colmatage 12, on réduit à nouveau la pression dans l'enceinte 7.

Il est évident de comprendre qu'à ce stade les morceaux 13 de béton sont éparpillés par l'effet des vibrations vers l'extrémité $1_b$ du couloir transporteur.

Il est à noter que le treillis joue un rôle essentiel dans le procédé de l'invention car il permet de répartir les déformations de la membrane et de la couche de béton 12 en de multiples points pour induire un nombre important d'amorces de fissures lors du rétablissement de la pression dans l'enceinte 7. En outre il permet d'avoir une pression sensiblement homogène dans la totalité de l'enceinte 7.

Un autre rôle essentiel du treillis 8 est de venir choquer la membrane pendant la phase de cassure de la couche de béton 12. Toutefois il est préférable que le treillis reste solidaire de la paroi support.

La présente invention permet donc de décoller et d'évacuer une couche de matériau, par exemple du béton, adhérente sur une paroi, en un temps bref, permettant de supprimer les arrêts prolongés de l'installation pour enlever la couche de colmatage de ladite paroi. De plus, ce procédé supprime toute intervention manuelle sur la surface, ce qui est important dans le cas de chaudière ou récipient, où il était jusqu'à présent nécessaire soit de réaliser une attaque chimique de la couche de colmatage soit de faire intervenir un ou plusieurs ouvriers à l'intérieur du récipient.

Bien entendu, l'invention n'est nullement limitée au mode de réalisation décrit et représenté qui n'a été donné qu'à titre d'exemple. C'est ainsi que la paroi 4, les éléments d'appui ou treillis peuvent être constitués en matière quelconque et intégrés à la paroi support, de plus la paroi 4 peut être également de forme variée, notamment cylindrique, ondulée, sans sortir du cadre de l'invention.

C'est dire que l'invention comprend tous les moyens constituant les équivalents techniques des moyens décrits ainsi que leurs combinaisons si celles-ci sont exécutées suivant son esprit et mise en oeuvre dans le cadre de la protection comme revendiquée.

Revendications

1. Procédé pour décoller et évacuer une couche fine de matériau susceptible de s'agglomérer, durcir et d'adhérer sur une paroi tel que par exemple de sels minéraux sur des filtres ou sur des membranes, du tartre sur la paroi d'une chaudière, du chocolat, du sucre, du béton ou analogues dans des dispositif de transport desdits matériaux ou analogues, caractérisé en ce que ledit procédé comprend les opérations successives suivantes :
- former sur ladite paroi, avant l'adhérence du matériau, des déformations multiples ;
- supprimer, quand le durcissement du matériau à rendu la couche cassante, les déformations précitées pour décoller ladite couche de la paroi ;
- produire des chocs localisés sur ladite surface pour fragmenter ladite couche et évacuer les morceaux ainsi formés.

2. Procédé selon la revendication 1, caractérisé en ce que les déformations multiples précitées sont obtenues par aspiration.

3. Stucture de paroi, notamment pour une chaudière, un récipient, un dispositif de transport de matériau tel que par exemple du béton frais, du chocolat, du sucre, ou analogue, pour la mise en oeuvre du procédé décrit dans l'une des revendications précédentes, caractérisée en ce qu'elle comprend une paroi de support recouverte par une paroi élastiquement déformable, sur laquelle se dépose et/ou adhère ledit matériau, ladite paroi déformable prenant appui localement sur des éléments d'appui interposés et répartis entre les deux parois précitées, et des moyens pour déformer la paroi déformable.

4. Structure de paroi, selon la revendication 3 caractérisée en ce que les éléments d'appui précités sont constitués par un treillis, de préférence réalisé en métal déployé.

5. Structure de paroi, selon la revendication 3 ou 4, caractérisé en ce que la paroi déformable précitée est fixée au voisinage de ses extrémités, sur la paroi support précitée, pour définir une enceinte étanche, et ladite paroi support comprenant au moins un orifice pour relier ladite enceinte à des moyens d'aspiration, par exemple une source de vide, et/ou des moyens de mise à l'air libre.

6. Structure de paroi, selon la revendication 5, caractérisée en ce que la paroi de support précitée comprend plusieurs orifices répartis sur toute sa surface et reliés aux moyens d'aspiration précités et/ou aux moyens de mise à l'air libre précités.

7. Structure de paroi, selon l'une des revendications précédentes, caractérisée en ce que la paroi déformable précitée est une membrane en matière synthétique à déformation élastique.

8. Structure de paroi, selon l'une des revendications 3 à 7, caractérisée en ce qu'au moins un vibrateur est monté sur la paroi support.

9. Dispositif de transport d'un matériau, tel que par exemple du béton, caractérisé en ce qu'il comprend une paroi de support du matériau, de structure décrite dans l'une au moins des revendications 3 à 8.

0054462

Fig. 1

Fig. 2

Fig. 3

Fig. 4

Fig. 5

**Office européen des brevets**

## RAPPORT DE RECHERCHE EUROPEENNE

| | DOCUMENTS CONSIDERES COMME PERTINENTS | | |
|---|---|---|---|
| Catégorie | Citation du document avec indication, en cas de besoin, des parties pertinentes | Revendication concernée | |
| A | <u>CH - A - 534 535</u> (FUCHS)<br><br>* colonne 1, ligne 62 à colonne 2, ligne 5; colonne 2, lignes 19-23; figure 1 * | 1 | |
| | -- | | |
| A | <u>US - A - 3 997 446</u> (MASATSUGU <u>NAGAKURA</u>)<br><br>* colonne 4, ligne 53 à colonne 5, ligne 35; figures 2-4 * | 1 | |
| | ------- | | |

**CLASSEMENT DE LA DEMANDE (Int. Cl. 3)**

B 08 B   7/04
B 65 G 27/04

**DOMAINES TECHNIQUES RECHERCHES (Int. Cl. 3)**

B 08 B
B 01 D
B 65 G
B 28 B

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 08.03.1982 | CLAEYS |

OEB Form 1503.1   06.78